(19) **Europäisches Patentamt European Patent Office Office européen des brevets**

(11) **EP 3 759 435 B1**

(12) **FASCICULE DE BREVET EUROPEEN**

(45) Date de publication et mention de la délivrance du brevet:
**06.05.2026 Bulletin 2026/19**

(21) Numéro de dépôt: **19704014.0**

(22) Date de dépôt: **12.02.2019**

(51) Classification Internationale des Brevets (IPC):
**G01C 21/30** *(2006.01)*    **G01S 19/48** *(2010.01)*
**G05D 1/00** *(2024.01)*    **G06F 16/901** *(2019.01)*

(52) Classification Coopérative des Brevets (CPC):
**G01C 21/30; G01S 19/14; G01S 19/396;**
**G05D 1/0274; G05D 1/0278; G06F 16/29;**
G01S 19/50

(86) Numéro de dépôt international:
**PCT/EP2019/053459**

(87) Numéro de publication internationale:
**WO 2019/166221 (06.09.2019 Gazette 2019/36)**

(54) **PROCÉDÉ D'ESTIMATION DE LA POSITION D'UN VÉHICULE SUR UNE CARTE**

VERFAHREN ZUR SCHÄTZUNG DER POSITION EINES FAHRZEUGS AUF EINER KARTE

METHOD FOR ESTIMATING THE POSITION OF A VEHICLE ON A MAP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.02.2018 FR 1851705**

(43) Date de publication de la demande:
**06.01.2021 Bulletin 2021/01**

(73) Titulaire: **Ampere SAS**
**92100 Boulogne-Billancourt (FR)**

(72) Inventeurs:
• **LI, Franck**
**91200 Athis-Mons (FR)**

• **BONNIFAIT, Philippe**
**60610 La Croix Saint Ouen (FR)**
• **IBANEZ-GUZMAN, Javier**
**78125 Raizeux (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**WO-A1-02/39063      WO-A2-2015/126499**
**US-A1- 2013 346 423**

## Description

La présente invention concerne de manière générale le domaine de la cartographie.

Elle concerne plus particulièrement un procédé d'estimation d'une position précise d'un véhicule sur une carte selon la revendication 1.

ARRIERE-PLAN TECHNOLOGIQUE

Pour assurer la sécurité des véhicules autonomes et des véhicules partiellement automatisés, il est nécessaire d'avoir une connaissance poussée de l'environnement dans lequel ces véhicules évoluent.

En pratique, la perception par un véhicule de son environnement se fait de deux façons différentes, à savoir :

- en utilisant une carte et un système de géolocalisation du véhicule, et
- en utilisant des capteurs extéroceptifs (caméras, capteur RADAR ou LIDAR...).

Les sociétés qui élaborent les cartes travaillent actuellement sur des cartes dites « à haute définition », permettant d'obtenir des informations très détaillées sur les caractéristiques du réseau routier (largeur des voies, marquages au sol, panneaux de signalisation...).

Ces cartes sont embarquées dans des véhicules équipés de systèmes de géolocalisation, ce qui permet à ces véhicules de se situer sur la carte en une position estimée par une longitude et une latitude.

On constate malheureusement que cette position n'est pas toujours très précise et fiable, ce qui se traduit alors par la localisation du véhicule hors de l'itinéraire réellement emprunté. Ce problème peut s'avérer particulièrement dangereux dans le cas d'un véhicule autonome qui utilise ces informations pour se diriger.

Pour remédier à ce problème, une solution connue du document DE102013217060 consiste à prendre en compte les informations provenant des capteurs extéroceptifs du véhicule pour ajuster la position du véhicule sur la carte.

Cette solution utilise une méthode appelée « filtre de particules ». Selon cette méthode, des particules correspondant aux positions probables du véhicule sont envisagées et traitées de façon à tenter de trouver la position précise du véhicule. Dans le document précité, les particules sont progressivement sélectionnées par ce filtre en fonction des positions des marquages de voies vus par les caméras embarqués dans le véhicule, jusqu'à ce qu'une seule et unique particule correspondant probablement à la position réelle du véhicule soit trouvée.

Cette solution présente deux inconvénients.

Son premier inconvénient est que sa fiabilité dépend très fortement de la visibilité des marquages de route. On comprend en effet qu'en l'absence de visibilité ou en l'absence de marquage de route, il donne des résultats peu fiables.

Son second inconvénient est qu'il ne permet de sélectionner *in fine* qu'une seule et unique particule, si bien que s'il commet une erreur, le véhicule automobile n'est pas en mesure de le savoir, ce qui peut s'avérer très dangereux.

Le document US20130346423 décrit un système de navigation qui enregistre une carte enrichie et qui utilise des signaux GPS pour localiser le véhicule sur cette carte.

De même pour le document WO02/39063 qui ré-échantillonne le nombre de particules pour qu'elles restent au dessus d'un seuil.

OBJET DE L'INVENTION

Afin de remédier aux inconvénients précités de l'état de la technique, la présente invention propose un nouveau procédé permettant de déterminer s'il est possible ou non de connaître la position précise d'un véhicule automobile sur une carte, et, si c'est le cas, quelle est cette position précise.

Plus particulièrement, on propose selon l'invention un procédé tel que défini dans l'introduction, dans lequel l'étape de filtrage particulaire comprend :

- une étape préalable de répartition de particules sur la carte, en fonction de la position géolocalisée du véhicule sur la carte, puis une étape de mise à jour des particules sur la carte,
- une étape de calcul de la vraisemblance de chaque particule, à partir au moins de données issues de la carte,
- une étape de sélection d'un ensemble restreint de particules, et
- si un indicateur, relatif à la vraisemblance des particules sélectionnées et au nombre de particules sélectionnées, passe en dessous d'un seuil, une étape de ré-échantillonnage de particules sur la carte.

Ainsi, grâce à l'invention, le calcul de la vraisemblance de chaque particule est réalisé à partir de données issues de la carte. Ce calcul peut donc être indépendant des données relevées par les capteurs extéroceptifs du véhicule. Il peut donc être indépendant de la visibilité des marquages au sol et de la visibilité de l'environnement du véhicule. Il fournit ainsi des résultats dont la fiabilité n'est pas dépendante des conditions extérieures.

Egalement grâce à l'invention, l'étape de ré-échantillonnage n'est pas effectuée systématiquement, ce qui évite un appauvrissement des particules, lequel pourrait potentiellement conduire à éliminer une particule correcte.

D'autres caractéristiques avantageuses et non limitatives du procédé conforme à l'invention sont les suivantes :

- la vraisemblance de chaque particule est calculée en fonction uniquement de données issues de la carte ;
- la vraisemblance de chaque particule est calculée en fonction également de données issues de capteurs permettant au véhicule de percevoir son environnement, à condition que ces données soient jugées fiables ;
- à l'étape de filtrage particulaire, la position précise est choisie parmi l'ensemble restreint de particules sélectionnées, en fonction de la vraisemblable de chaque particule ;
- la carte stockant des données relatives à des tronçons de routes, la vraisemblance de chaque particule est calculée en fonction de la position du plus proche tronçon de route par rapport à la particule ;
- à l'étape préalable, les particules sont réparties dans un disque centré sur la position géolocalisée du véhicule ;
- le rayon du disque est déterminé en fonction du niveau de protection horizontal affecté à la position géolocalisée du véhicule ;
- à l'étape de sélection, les particules sont sélectionnées en fonction de la distance les séparant de la position géolocalisée du véhicule ;
- à l'étape de mise à jour, les particules sont déplacées sur la carte en fonction uniquement d'informations relatives à la dynamique du véhicule ;
- à l'étape de ré-échantillonnage, les particules sont ré-échantillonnées à l'aide d'une technique à faible variance.

L'invention concerne aussi un véhicule comportant :

- des moyens de mémorisation d'une carte,
- un système de géolocalisation, et
- un calculateur adapté à mettre en œuvre un procédé d'estimation d'une position précise du véhicule sur la carte tel que précité.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est un schéma illustrant les différentes étapes d'un procédé conforme à l'invention,
- la figure 2 est une vue de dessus d'un véhicule roulant sur une route,
- la figure 3 est une vue schématique de particules réparties sur une carte,
- la figure 4 est une vue schématique de deux particules situées à côté de deux tronçons de route successifs, et
- la figure 5 est une vue schématique de quatre particules situées à côté de quatre tronçons de route.

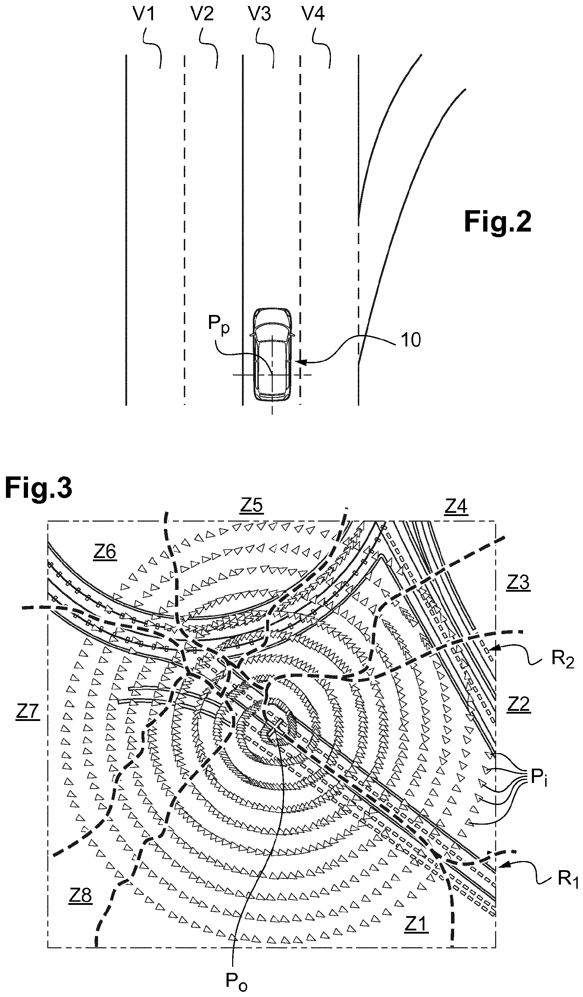

Sur la figure 2, on a représenté un véhicule automobile 10 qui se présente sous la forme d'un voiture et qui roule sur une portion de route à quatre voies de circulation V1, V2, V3, V4.

Dans la suite de la description, on s'intéressera plus particulièrement à la localisation de ce véhicule automobile 10 sur une carte mais l'invention ne se limitera pas à un tel exemple. Elle s'appliquera ainsi notamment à la localisation de tout véhicule terrestre, maritime, aérien ou spatial sur une carte.

Le véhicule automobile 10 ici considéré comporte classiquement un châssis, un groupe motopropulseur, un système de direction, un système de freinage, et une unité de calcul électronique et/ou informatique, appelée ci-après calculateur.

Le calculateur est connecté à des capteurs dits « proprioceptifs », qui permettent de mesurer précisément la vitesse du véhicule et la vitesse angulaire en lacet du véhicule.

Le calculateur est de préférence aussi connecté à des capteurs dits « extéroceptifs », qui permettent de percevoir l'environnement immédiat du véhicule automobile 10 (il peut s'agir de caméras, de capteurs RADAR, de capteurs LIDAR...).

Le calculateur est par ailleurs connecté à un système de géolocalisation qui permet d'évaluer la position géolocalisée $P_0$ du véhicule 10, ici définie par une latitude et une longitude. Il peut par exemple s'agir d'un système GPS.

On considérera ici que ce système de géolocalisation est par ailleurs adapté à transmettre au calculateur une donnée appelée « niveau de protection horizontal HPL » (de l'anglais « horizontal protection level »). Cette donnée, bien connue de l'homme de l'art, correspond à l'incertitude de mesure de la position géolocalisée $P_0$. Sa valeur varie par exemple en fonction du nombre de satellites desquels le système de géolocalisation reçoit des données, de la qualité de la réception des signaux, de la qualité du système de géolocalisation utilisé...

Dans le même ordre d'idées, on considérera ici aussi que ce système de géolocalisation est adapté à transmettre au calculateur une matrice de covariance relative à cette même incertitude.

Le véhicule automobile 10 considéré pourrait être semi automatisé, de façon à ce que son calculateur puisse par exemple déclencher un freinage d'urgence lorsque le conducteur n'a pas perçu un danger et n'a pas lui-même exercé d'action adaptée.

Toutefois, dans la suite de cet exposé, on considérera que le véhicule automobile 10 est du type autonome, et que le calculateur est adapté à commander le groupe motopropulseur, le système de direction, et le système de freinage du véhicule.

Le calculateur comporte alors une mémoire informatique qui enregistre des données utilisées dans le cadre du pilotage autonome du véhicule, et notamment dans le cadre du procédé décrit ci-dessous.

Il mémorise notamment une application informatique, constituée de programmes d'ordinateur comprenant des instructions dont l'exécution par un processeur permet la mise en œuvre par le calculateur du procédé décrit ci-après.

Il mémorise également une carte topographique dite « à haute-définition ».

Cette carte stocke de nombreuses données.

Elle comprend tout d'abord des informations relatives à la topographie des routes. Cette topographie est ici mémorisée sous forme de tronçons de routes (ou « mailles » ou, en anglais, « link »). Chaque tronçon de route est ici défini comme une portion d'une seule voie de circulation d'une route, dont les caractéristiques sont constantes sur toute sa longueur (forme des marquages au sol identique le long du tronçon de route, largeur constante de ce tronçon de route...).

La carte stocke également d'autres données caractérisant chaque tronçon de route, parmi lesquelles la largeur de la voie de circulation, la forme des marquages au sol situés de part et d'autre de la voie de circulation, la position et la forme de chaque panneau bordant la route au niveau du tronçon de route, les identifiants des tronçons de route précédent et suivant...

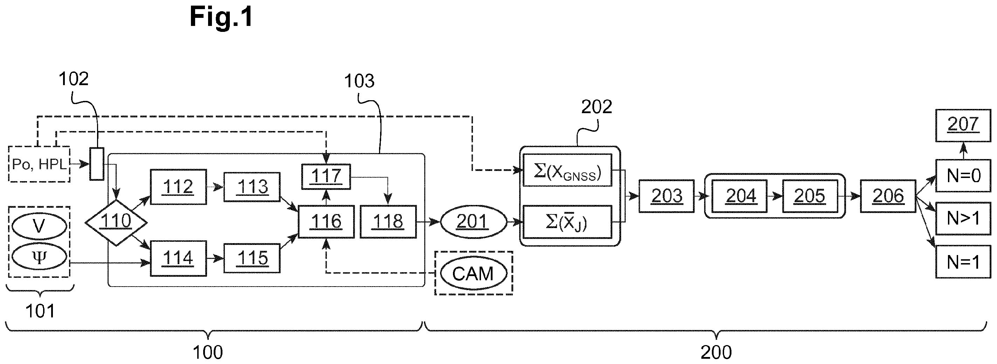

Le procédé mis en œuvre par le calculateur pour estimer la position précise $P_p$ du véhicule automobile 10 sur la carte comprend deux grandes opérations, dont une opération de filtrage de particules 100, et une opération de sélection d'hypothèses 200 (voir figure 1).

L'opération de sélection d'hypothèses 200 utilise les résultats de l'opération de filtrage de particules 100, si bien qu'elle est mise en œuvre après celle-ci.

On peut alors commencer par décrire la première opération de filtrage de particules 100.

Cette opération est mise en œuvre de manière récursive, c'est-à-dire en boucle et à pas de temps réguliers.

Elle comprend trois étapes principales.

La première étape 101 consiste pour le calculateur à acquérir différentes données via les capteurs auxquels il est connecté.

Le calculateur acquiert ainsi la position géolocalisée $P_0$ du véhicule automobile 10 et le niveau de protection horizontal HPL qui lui est associé. Ces données sont acquises grâce au système de géolocalisation qui fournit une latitude, une longitude et un niveau de protection horizontal HPL.

Le calculateur acquiert également des données relatives à la dynamique du véhicule automobile 10. Il acquiert ainsi la vitesse V du véhicule et sa vitesse angulaire en lacet $\Psi$.

La seconde étape 102 est une étape de pré-positionnement du véhicule 10 sur la carte, à la position géolocalisée $P_0$ acquise.

La troisième étape 103 est une étape de filtrage particulaire au cours de laquelle des positions possibles du véhicule (ou plus exactement des postures possibles du véhicule), appelées particules $P_i$, sont traitées en vue de déterminer la position précise $P_p$ du véhicule 10 sur la carte (ou plus exactement la posture précise du véhicule sur la carte).

Chaque particule $P_i$ peut être définie par :

- deux coordonnées $x_i$, $y_i$ permettant de définir la position de la particule dans un repère cartésien (ces coordonnées sont liées aux latitude et longitude acquises),
- un angle de lacet permettant de définir l'angle que fait la particule par rapport à une direction donnée telle que le Nord, et
- un identifiant de la carte à laquelle la particule $P_i$ est associée.

Sur les figures 3 à 5, on a représenté des particules $P_i$ sous la forme de triangles isocèles, chaque triangle présentant un centre $M_i$ qui correspond à la position de la particule sur la carte, et une orientation qui correspond à l'angle de lacet de la particule sur la carte.

Comme le montre la figure 1, la troisième étape 103 de filtrage particulaire est plus précisément constituée de plusieurs sous-étapes que l'on peut maintenant décrire plus en détail.

La première sous-étape 110 consiste à déterminer si l'on se trouve ou on dans une phase d'initialisation du filtre particulaire, ce qui est par exemple le cas au démarrage du véhicule automobile 10.

On peut tout d'abord se placer dans cette situation, auquel cas aucune particule n'a encore été générée.

La sous-étape suivante 112 consiste alors à créer et répartir des particules $P_i$ sur la carte, compte tenu de la position géolocalisée $P_0$ du véhicule 10.

Pour cela, les particules $P_i$ sont réparties dans un disque centré sur la position géolocalisée $P_0$ du véhicule 10, dont le rayon est ici égal au niveau de protection horizontal HPL.

Elles sont plus précisément réparties selon une spirale, avec un écart angulaire constant. Les caractéristiques de la spirale et l'écart angulaire entre les particules $P_i$ sont choisis en fonction du nombre de particules $P_i$ que l'on souhaite générer.

Ce nombre est supérieur à 100, et préférentiellement de l'ordre de 1000. Il est déterminé de façon à obtenir une précision suffisante, sans pour autant surcharger le calculateur.

A ce stade, les particules $P_i$ ne sont pas encore orientées.

Chaque particule $P_i$ correspond ainsi à une position possible que le véhicule pourrait présenter, compte tenu de l'erreur affectant le système de géolocalisation.

Certaines particules, comme on peut le constater sur la figure 3, se situent en dehors de la route. Cela illustre le fait que les particules ne sont pas contraintes sur la carte et qu'elles pourront évoluer dans un espace à deux dimensions. Le filtre est donc très souple et permet d'envisager initialement un très grand nombre de solutions différentes, dont les plus absurdes seront ensuite éliminées par le filtre particulaire.

Au cours d'une sous-étape 113 suivante, le calculateur associe chaque particule $P_i$ à son plus proche tronçon de route.

La méthode choisie est ici du type « point-to-curve ». Elle consiste à associer chaque particule $P_i$ au tronçon de route qui est le plus proche au sens de la distance Euclidienne.

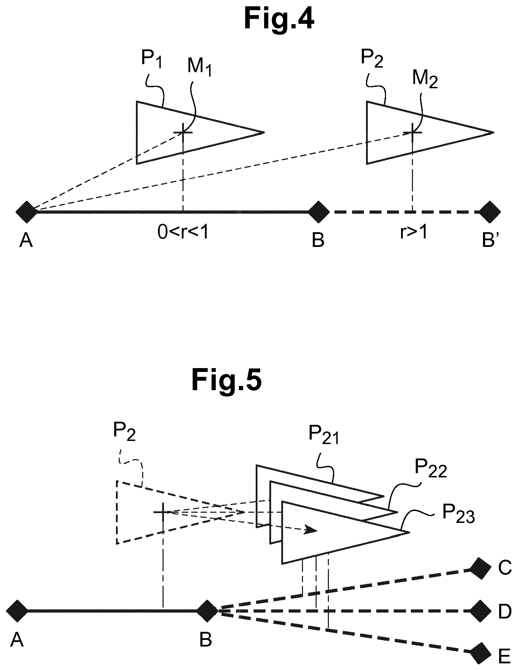

A titre d'exemple illustratif, sur la figure 4, on observe ainsi que la particule $P_1$ est associée au tronçon de route AB.

A ce stade, le calculateur peut orienter les particules $P_i$ en fonction notamment de l'orientation du tronçon de route auquel chaque particule est associée (et possiblement aussi en fonction de la dynamique du véhicule).

Le procédé se poursuit ensuite en une sous-étape 116 qui sera décrite plus loin.

Comme cela a été décrit supra, la première sous-étape 110 consistait à déterminer si l'on se trouvait ou non dans une phase d'initialisation du filtre particulaire.

On peut maintenant envisager que tel n'est pas le cas et que le processus a déjà été initialisé auparavant.

Dans ce cas, au cours d'une sous-étape 114, le calculateur met à jour les particules $P_i$ sur la carte.

Pour cela, les particules $P_i$ sont toutes déplacées sur la carte en fonction d'informations relatives à la dynamique du véhicule.

Les deux données que sont la vitesse V du véhicule et la vitesse angulaire en lacet $\Psi$ du véhicule automobile 10 sont en effet employées pour déplacer toutes les particules $P_i$ d'une distance donnée et pour réorienter les particules d'un angle donné.

On notera que cette sous-étape n'utilise cette fois pas la position géolocalisée $P_0$ du véhicule automobile.

Au cours d'une sous-étape 115 suivante, le calculateur ré-associe chaque particule $P_i$ à un tronçon de route.

Il détermine plus précisément quelles sont les particules $P_i$ qui doivent être associées à un nouveau tronçon de route, et il identifie ce nouveau tronçon de route.

Pour comprendre comment le calculateur opère, on peut se référer à la figure 4 sur laquelle deux particules $P_1$, $P_2$, centrées sur des points M1, M2, sont représentées et sur laquelle est également représenté un tronçon de route AB.

On considère ici qu'au pas de temps précédent, les deux particules $P_1$, $P_2$, étaient associées à un seul et même tronçon de route AB, puis qu'elles ont été déplacées au cours de la sous-étape 114.

Le calculateur détermine alors pour chaque particule $P_i$ un ratio r, afin de savoir si chaque particule doit ou non être associée à un nouveau tronçon de route.

Ce ratio r est calculé selon la formule suivante :

$$r = \frac{(\overrightarrow{AB} \cdot \overrightarrow{AM_i})}{\left\|\overrightarrow{AB}\right\|^2}$$

Dans le cas où ce ratio r est compris entre 0 et 1, l'association de la particule $P_i$ avec son tronçon de route d'origine ne doit pas être changée. C'est le cas ici pour la particule $P_1$.

Dans le cas où ce rapport est négatif, l'association de la particule $P_i$ avec son tronçon de route doit être changée. Cette particule doit plus précisément être associée avec le tronçon de route précédent ou avec l'un des tronçons de route précédents.

Dans le cas où ce rapport est strictement supérieur à 1, l'association de la particule $P_i$ avec son tronçon de route doit être changée. Cette particule doit plus précisément être associée avec le tronçon de route suivant ou avec l'un des tronçons de route suivants.

Plusieurs situations peuvent ainsi être rencontrées.

Dans la situation de la figure 4 où le tronçon de route AB ne comprend qu'un unique successeur BB', la particule $P_2$ est associée à ce successeur (pour autant que le ratio r soit compris entre 0 et 1 avec ce nouveau tronçon de route, sinon un autre successeur est envisagé).

Dans la situation de la figure 5 où le tronçon de route AB comprend de multiples successeurs BC, BD, BE, la particule $P_2$ considérée au pas de temps précédent est clonée en autant de particules $P_{21}, P_{22}, P_{23}$ qu'il y a de successeurs BC, BD, BE.

On peut prévoir aussi de cloner la particule moins de fois si certains des successeurs ne sont pas envisageables, compte tenu de la dynamique du véhicule.

Dans une autre situation non représentée sur les figures, il est possible que la particule doive être associée à un autre tronçon de route parallèle au tronçon de route auquel il était associé au pas de temps précédent (ce qui arrivera notamment lorsque le véhicule change latéralement de voie de circulation, par exemple pour doubler un autre véhicule). Cela est rendu possible car les particules ne sont pas contraintes à évoluer uniquement sur le même tronçon de route. Cette situation peut être détectée compte tenu de la nouvelle position de la particule et des données stockées dans la carte (informations de marquage au sol, largeurs des voies de circulation...). Dans une variante, on peut envisager que cette situation soit détectée à l'aide en outre de caméras embarquées dans le véhicule.

Au cours d'une sous-étape 116 qui suit aussi bien la sous-étape 115 que la sous-étape 113, le calculateur calcule la vraisemblance $w_i$ de chaque particule $P_i$.

La vraisemblance d'une particule est ici exprimée par son poids $w_i$. Plus le poids d'une particule est grand, plus il est probable que la particule considérée corresponde à la position exacte du véhicule automobile 10.

Ce poids peut être calculé de différentes façons.

Dans un premier mode de réalisation, le poids $w_i$ de chaque particule $P_i$ est calculé en fonction uniquement de données issues de la carte.

Il est plus précisément déterminé en fonction de la distance Euclidienne qui sépare la particule considérée du tronçon de route auquel elle est associée (ce poids est par exemple inversement égal à cette distance).

Dans un second mode de réalisation, le poids $w_i$ de chaque particule $P_i$ est calculé en fonction également de données issues des capteurs extéroceptifs, à condition que ces données soient jugées fiables.

On peut en effet imaginer d'augmenter ou de réduire le poids de la particule considérée en fonction des informations latérales en provenance des caméras CAM du véhicule. Ces caméras sont effectivement capables de détecter les lignes de marquage au sol et de les retourner au calculateur sous la forme d'un modèle polynomial. Le calculateur peut alors vérifier si la forme de ces lignes correspond à celle des marquages au sol enregistrés dans la carte, et ajuster le poids de la particule en correspondance.

On peut noter que les marquages au sol ne sont pas toujours détectés par les caméras. Ceci peut être dû à des conditions difficiles pour les capteurs comme par exemple un mauvais éclairage, une route mouillée, des marquages effacés, etc... Dans ces cas particuliers, la caméra indique au calculateur un niveau de confiance faible et le calcul du poids se base alors uniquement sur les données fournies par la carte comme décrit dans le premier mode de réalisation.

On observera ici que le critère de fiabilité d'une donnée est généralement fourni par le capteur qui mesure la donnée, par exemple sous la forme d'n pourcentage (lequel pourcentage sera alors utilisé pour déterminer si la donnée doit ou non être prise en compte).

Quelle que soit la méthode utilisée, le procédé se poursuit en une sous-étape 117 de sélection d'un ensemble restreint de particules $P_i$, de façon à éliminer celles qui se seraient trop écartée de la position géolocalisée $P_0$ instantanée du véhicule automobile 10.

Pour mettre en œuvre cette sous-étape, le calculateur acquiert la nouvelle position géolocalisée $P_0$ du véhicule automobile 10, puis il calcule la distance séparant chaque particule $P_i$ de cette position géolocalisée $P_0$ instantanée.

Si cette distance est supérieure au niveau de protection horizontal HPL, le poids $w_i$ de la particule $P_i$ correspondante est fixé à zéro, ce qui permettra à cette particule d'être automatiquement éliminée par la suite.

Dans le cas contraire, le poids $w_i$ de la particule $P_i$ correspondante n'est pas modifié.

Au cours d'une sous-étape 118 suivante, le calculateur détermine s'il est nécessaire ou non de ré-échantillonner des particules Pi sur la carte.

Il utilise pour cela un indicateur $N_{eff}$, qui est calculé en fonction du poids $w_i$ des particules $P_i$ et du nombre de particules $P_i$.

Si cet indicateur $N_{eff}$ passe en dessous d'un seuil prédéterminé (stocké dans la mémoire morte du calculateur), alors le calculateur ré-échantillonne les particules $P_i$ sur la carte. Sinon, les particules $P_i$ sont conservées dans leur état.

Comme on le sait, un ré-échantillonnage consiste à considérer les particules (ci-après appelées particules originales) dans leur ensemble, et à tirer de nouvelles particules dans cet ensemble original.

Pour ré-échantillonner les particules, le calculateur pourrait utiliser une méthode classique au cours de laquelle il tirerait aléatoirement un nombre prédéfini de nouvelles particules dans l'ensemble original de particules $P_i$, la probabilité de tirer chaque particule $P_i$ étant proportionnelle au poids $w_i$ de cette particule $P_i$. Toutefois, cette méthode cause généralement un appauvrissement des particules, puisque ce sont toujours celles qui ont un poids très important qui sont tirées.

De façon préférentielle, le calculateur utilise plutôt ici une méthode de ré-échantillonnage dit « à faible variance » (de l'anglais « Low Variance Resampling »). Cette méthode favorise en effet le maintien d'une bonne répartition des particules sur la carte. Cette méthode consiste à tirer aléatoirement un nombre prédéfini de nouvelles particules dans l'ensemble original de particules $P_i$, la probabilité de tirer chaque particule $P_i$ étant fonction du poids $w_i$ de cette particule $P_i$ mais n'étant cette fois pas proportionnelle à ce poids.

A ce stade, le calculateur pourrait se contenter de recommencer en boucle les sous-étapes 114 à 118 jusqu'à obtenir des particules situées toutes autour d'un seul et même point, lequel serait considéré comme correspondant à la position précise $P_p$ du véhicule automobile 10 sur la carte.

Ce n'est toutefois pas ici l'option qui est choisie. Ainsi, comme cela a été exposé précédemment, une fois la sous-étape 118 achevée, il est prévu une opération de sélection d'hypothèses 200.

Cette opération de sélection d'hypothèses 200 est mise en œuvre une fois que l'opération de filtrage de particules 100 a convergé et a donné un nombre restreint de solutions (les particules étant par exemple groupées autour d'un nombre de points inférieur à un seuil prédéterminé).

Cette opération de sélection d'hypothèses 200 est mise en œuvre de manière récursive, c'est-à-dire en boucle et à pas de temps réguliers. Elle comporte plusieurs étapes successives.

Au cours d'une première étape 201, le calculateur sélectionne des « hypothèses ».

Il considère pour cela les particules $P_i$ en différents ensembles au sein de chacun desquels les particules sont toutes associées à une même voie de circulation (ou, en variante, à un même tronçon de route).

L'intérêt de travailler sur des hypothèses est qu'il va alors être possible de sélectionner toutes les hypothèses les plus vraisemblables, ce qui permettra, d'une part, de garder la bonne hypothèse parmi celles sélectionnées, et, d'autre part, de vérifier la validité de chaque hypothèse sélectionnée.

Les hypothèses peuvent être formulées sous la forme d'assertions telles que « le véhicule se situe dans la voie de circulation dont la référence est ... ».

Pour bien comprendre à quoi correspond une hypothèse au sens du présent exposé, on a regroupé sur la figure 3 les particules en huit ensembles $Z_1$, $Z_2$, $Z_3$, $Z_4$, $Z_5$, $Z_6$, $Z_7$, $Z_8$ correspondant chacun à une hypothèse.

A titre d'exemple, les particules de l'ensemble $Z_1$ correspondent à l'hypothèse « le véhicule se situe dans la voie de circulation de droite de la route $R_1$ ».

Les particules de l'ensemble $Z_2$ correspondent à l'hypothèse « le véhicule se situe dans la voie de circulation de gauche de la route $R_1$ ».

Les particules de l'ensemble $Z_3$ correspondent à l'hypothèse « le véhicule se situe dans la voie de circulation de gauche de la route $R_2$ ».

Les particules de l'ensemble $Z_4$ correspondent à l'hypothèse « le véhicule se situe sur le rond-point, entre ses jonctions avec les routes $R_1$ et $R_2$ »...

En considérant qu'il est trouvé un nombre « J » d'hypothèses (sur la figure 3, J=8), chaque hypothèse peut également être exprimé sous la forme d'un vecteur $\overline{X_J}$ dont les composantes correspondent à la somme des coordonnées des particules $P_i$ de cette hypothèse, pondérées par le poids $w_i$ de ces particules.

Le calculateur peut affecter à chaque hypothèse un « indice de confiance » égal à la somme des poids $w_i$ des particules $P_i$ de cette hypothèse.

Au cours d'une seconde étape 202, le calculateur va déterminer la matrice de covariance $\Sigma^{-1}(\overline{X}_J)$ de chaque hypothèse et la matrice de covariance $\Sigma^{-1}(X_{GNSS})$ de la position géolocalisée $P_0$ du véhicule 10.

Manipuler de telles matrices de covariance permet en effet de caractériser l'incertitude liée à chaque hypothèse et celle liée à la position géolocalisée $P_0$ fournie par le système de géolocalisation.

Comme cela a été exposé supra, la matrice de covariance $\Sigma^{-1}(X_{GNSS})$ liée à la position géolocalisée $P_0$ du véhicule 10 est ici directement transmise au calculateur par le système de géolocalisation. Il s'agit ici d'une matrice 2x2.

S'agissant de la matrice de covariance $\Sigma^{-1}(\overline{X}_J)$ liée à chaque hypothèse, elle est calculée en fonction des poids $w_i$ de l'ensemble des particules $P_i$ associées à cette hypothèse. Il s'agit ici aussi d'une matrice 2x2.

Il est ensuite nécessaire de déterminer dans quelle mesure chaque hypothèse est « cohérente », compte tenu de la position géolocalisée $P_0$ fournie par le système de géolocalisation et en tenant compte de l'erreur liée à la mesure de cette position géolocalisée.

Pour cela, au cours d'une étape 203, on utilise un objet mathématique appelé distance de Mahalanobis $D_{Mj}$, dont l'expression est la suivante :

$$D_{M_j}\left(\overline{X_j}\right) = \sqrt{\left(\overline{X_j} - X_{GNSS}\right)^T \cdot \left[\Sigma^{-1}\left(\overline{X_j}\right) - \Sigma^{-1}\left(X_{GNSS}\right)\right]}$$

où $X_{GNSS}$ correspond au vecteur « position géolocalisée $P_0$ ».

La distance de Mahalanobis est en effet un objet qui permet d'évaluer la cohérence entre deux situations incertaines, en prenant en compte les covariances des variables (c'est-à-dire le doute lié à chaque variable).

Alors, au cours d'une étape 204, il est prévu de sélectionner un premier ensemble restreint (voire vide) d'hypothèses parmi les hypothèses acquises à l'étape 201.

On réalise pour cela un test de Khi-deux ($X^2$) pour chaque distance de Mahalanobis $D_{Mj}$.

En pratique, chaque distance de Mahalanobis $D_{Mj}$ est ici comparée à un seuil critique pour déterminer si l'hypothèse considérée est ou non cohérente avec la position géolocalisée $P_0$.

Si l'hypothèse considérée et la position géolocalisée $P_0$ sont cohérentes au sens du test de KHI-deux, l'hypothèse est conservée.

Au contraire, si l'hypothèse considérée et la position géolocalisée $P_0$ ne sont pas cohérentes au sens du test du KHI-deux, l'hypothèse est rejetée.

On notera ici qui si une hypothèse est conservée, cela ne signifie pas nécessairement que cette hypothèse est vraie. En effet, à ce stade, plusieurs hypothèses peuvent être conservées.

A contrario, si une hypothèse est rejetée, cela ne signifie pas nécessairement que cette hypothèse était fausse. Il peut en effet arriver qu'une grosse erreur affecte la mesure de la position géolocalisée $P_0$. Dans ce cas, une hypothèse vraie peut être rejetée. Comme cela apparaîtra clairement dans la suite de cet exposé, cela n'affectera pas pour autant la fiabilité de la méthode ici proposée.

Au cours d'une étape 205 subséquente, il est prévu de sélectionner un second ensemble restreint (voire vide) d'hypothèses parmi les hypothèses sélectionnées à l'étape 204.

On notera ici que cette seconde sélection aurait pu être opérée avant la première sélection sans pour autant affecter le déroulement du procédé.

Cette seconde sélection consiste à ne conserver que les hypothèses « vraisemblables », pour lesquelles un indicateur, lié aux poids $w_i$ des particules $P_i$ qui composent cette hypothèse, est supérieur à un seuil déterminé. L'objectif est en effet d'éliminer les hypothèses qui ont satisfait le test de cohérence de KHI-deux, mais qui sont peu probables.

Pour cela, le calculateur élimine les hypothèses pour lesquelles l'indice de confiance (dont on rappelle qu'il est égal à la somme des poids $w_i$ des particules $P_i$ de l'hypothèse considérée) est inférieur à un seuil déterminé. Ce seuil est ici invariable et mémorisé dans la mémoire morte du calculateur.

A l'issue de ces deux étapes de sélection d'hypothèses, le calculateur a retenu un nombre N d'hypothèses non seulement cohérentes mais aussi vraisemblables.

Au cours d'une étape 206, il est alors prévu de déterminer le caractère utilisable ou non de chaque hypothèse sélectionnée, en fonction de ce nombre N.

Trois cas sont alors envisageables.

Le premier cas est celui où le nombre N est égal à 1. Dans ce cas, puisqu'une seule hypothèse a été retenue, cette hypothèse est considérée comme juste et utilisable pour générer une consigne de conduite du véhicule autonome. Il s'ensuit que le calculateur peut s'y fier. Dans ce cas, le calculateur peut alors considérer que la particule de plus gros poids de cette hypothèse correspond à la position précise $P_p$ du véhicule 10.

Le second cas est celui où le nombre N est strictement supérieur à 1. Dans ce cas, puisque plusieurs hypothèses ont été retenues, aucune n'est considérée comme utilisable pour générer une consigne de conduite du véhicule autonome. Le procédé est donc redémarré en boucle jusqu'à obtenir une seule et unique hypothèse.

Le dernier cas est celui où le nombre N est égal à 0. Dans ce cas, puisqu'aucune hypothèse n'a été retenue, aucune particule n'est considérée comme utilisable pour générer une consigne de conduite du véhicule autonome. Par ailleurs, le calculateur peut avantageusement déduire de cette situation qu'il existe une incohérence entre les mesures effectuées par le système de géolocalisation et les hypothèses acquises, ce qui est probablement dû à un problème affectant le système de géolocalisation. Dans cette éventualité, il est prévu une étape 207 d'émission d'une alerte à destination du conducteur et/ou de l'unité de pilotage du véhicule en mode autonome, de façon à ce que celui-ci puisse prendre les mesures qui s'imposent (arrêt d'urgence, pilotage en mode dégradé, ...).

**Revendications**

1. Procédé d'estimation d'une position précise ($P_p$) d'un véhicule (10) sur une carte stockant des données relatives à des tronçons de routes, comportant :

- une étape d'acquisition d'au moins une position géolocalisée ($P_0$) du véhicule (10) au moyen d'un système de géolocalisation,
- une étape de pré-positionnement du véhicule (10) sur la carte, à sa position géolocalisée ($P_0$), et
- une étape de filtrage particulaire au cours de laquelle des positions possibles du véhicule, appelées particules ($P_i$), sont traitées pour déterminer la position précise ($P_p$) du véhicule (10) sur la carte,

**caractérisé en ce que** l'étape de filtrage particulaire comprend :

- une étape préalable de répartition de particules ($P_i$) sur la carte, en fonction de la position géolocalisée ($P_0$) du véhicule (10) sur la carte, les particules n'étant pas contraintes sur la carte, puis une étape de mise à jour des particules ($P_i$) sur la carte en fonction d'informations relatives à la dynamique du véhicule (10),
- une étape de calcul de la vraisemblance ($w_i$) de chaque particule ($P_i$), à partir au moins de données issues de la carte,
- une étape de sélection d'un ensemble restreint de particules ($P_i$), et
- à la seule condition qu'un indicateur ($N_{eff}$), relatif à la vraisemblance ($w_i$) des particules ($P_i$) sélectionnées et au nombre de particules ($P_i$) sélectionnées, passe en dessous d'un seuil, une étape de ré-échantillonnage de particules ($P_i$) sur la carte.

2. Procédé d'estimation selon la revendication 1, dans lequel la vraisemblance ($w_i$) de chaque particule ($P_i$) est calculée en fonction uniquement de données issues de la carte.

3. Procédé d'estimation selon la revendication 1, dans lequel la vraisemblance ($w_i$) de chaque particule ($P_i$) est calculée en fonction également de données issues de capteurs permettant au véhicule (10) de percevoir son environnement, à condition que ces données soient jugées fiables.

4. Procédé d'estimation selon l'une des revendications précédentes, dans lequel, à l'étape de filtrage particulaire, la position précise ($P_p$) est choisie parmi l'ensemble restreint de particules ($P_i$) sélectionnées, en fonction de la vraisemblable ($w_i$) de chaque particule ($P_i$).

5. Procédé d'estimation selon l'une des revendications précédentes, dans lequel la vraisemblance ($w_i$) de chaque particule ($P_i$) est calculée en fonction de la position du plus proche tronçon de route par rapport à la particule ($P_i$).

6. Procédé d'estimation selon l'une des revendications précédentes, dans lequel, à l'étape préalable, les particules ($P_i$) sont réparties dans un disque centré sur la position géolocalisée ($P_0$) du véhicule (10).

7. Procédé d'estimation selon la revendication 6, dans lequel le rayon du disque est déterminé en fonction du niveau de protection horizontal (HPL) affecté à la position géolocalisée ($P_0$) du véhicule (10).

8. Procédé d'estimation selon l'une des revendications précédentes, dans lequel, à l'étape de sélection, les particules ($P_i$) sont sélectionnées en fonction de la distance les séparant de la position géolocalisée ($P_0$) du véhicule (10).

9. Procédé d'estimation selon l'une des revendications précédentes, dans lequel, à l'étape de mise à jour, les particules ($P_i$) sont déplacées sur la carte en fonction uniquement d'informations relatives à la dynamique du véhicule.

10. Procédé d'estimation selon l'une des revendications précédentes, dans lequel, à l'étape de ré-échantillonnage, les particules ($P_i$) sont ré-échantillonnées à l'aide d'une technique à faible variance.

11. Véhicule (10) comportant :

- des moyens de mémorisation d'une carte,
- un système de géolocalisation, et
- un calculateur adapté à pré-positionner le véhicule (10) sur la carte,

**caractérisé en ce que** le calculateur est adapté à mettre en œuvre un procédé d'estimation d'une position précise ($P_p$) du véhicule (10) sur la carte, conforme à l'une des revendications précédentes.

**Patentansprüche**

1. Verfahren zum Schätzen einer genauen Position ($P_p$) eines Fahrzeugs (10) auf einer Karte, in der Daten bezüglich von Straßenabschnitten gespeichert sind, umfassend:

    - einen Schritt des Erfassens mindestens einer geolokalisierten Position ($P_0$) des Fahrzeugs (10) mittels eines Geolokalisierungssystems,
    - einen Schritt des Vorpositionierens des Fahrzeugs (10) auf der Karte an seiner geolokalisierten Position ($P_0$), und
    - einen Schritt der Partikelfilterung, bei dem mögliche Positionen des Fahrzeugs, Partikel ($P_i$) genannt, verarbeitet werden, um die genaue Position ($P_p$) des Fahrzeugs (10) auf der Karte zu bestimmen,

    **dadurch gekennzeichnet, dass** der Schritt der Partikelfilterung umfasst:

    - einen Vorabschritt des Verteilens von Partikeln ($P_i$) auf der Karte, in Abhängigkeit von der geolokalisierten Position ($P_0$) des Fahrzeugs (10) auf der Karte, wobei die Partikel auf der Karte nicht eingeschränkt sind, dann einen Schritt des Aktualisierens der Partikel ($P_i$) auf der Karte in Abhängigkeit von Informationen bezüglich der Dynamik des Fahrzeugs (10),
    - einen Schritt des Berechnens der Wahrscheinlichkeit ($w_i$) jedes Partikels ($P_i$) ausgehend mindestens von Daten, die aus der Karte hervorgegangen sind;
    - einen Schritt des Auswählens einer begrenzten Menge von Partikeln ($P_i$), und
    - unter der einzigen Bedingung, dass ein Indikator ($N_{eff}$) bezüglich der Wahrscheinlichkeit ($w_i$) der ausgewählten Partikel ($P_i$) und der Anzahl ausgewählter Partikel ($P_i$) unter einen Schwellenwert sinkt, einen Schritt des Resamplings von Partikeln ($P_i$) auf der Karte.

2. Verfahren zum Schätzen nach Anspruch 1, wobei die Wahrscheinlichkeit ($w_i$) jedes Partikels ($P_i$) nur in Abhängigkeit von Daten berechnet wird, die aus der Karte hervorgegangen sind.

3. Verfahren zum Schätzen nach Anspruch 1, wobei die Wahrscheinlichkeit ($w_i$) jedes Partikels ($P_i$) auch in Abhängigkeit von Daten berechnet wird, die aus Sensoren hervorgegangen sind, die es dem Fahrzeug (10) ermöglichen, seine Umgebung wahrzunehmen, sofern diese Daten als zuverlässig angesehen werden.

4. Verfahren zum Schätzen nach einem der vorhergehenden Ansprüche, wobei in dem Schritt der Partelfilterung die genaue Position ($P_p$) aus der begrenzten Menge ausgewählter Partikel ($P_i$), in Abhängigkeit von der Wahrscheinlichkeit ($w_i$) jedes Partikels ($P_i$), gewählt wird.

5. Verfahren zum Schätzen nach einem der vorhergehenden Ansprüche, wobei die Wahrscheinlichkeit ($w_i$) jedes Partikels ($P_i$) in Abhängigkeit von der Position des zu dem Partikel ($P_i$) nächstgelegenen Straßenabschnitts berechnet wird.

6. Verfahren zum Schätzen nach einem der vorhergehenden Ansprüche, wobei die Partikel ($P_i$) in dem Vorabschritt in einer Scheibe verteilt werden, die auf die geolokalisierte Position ($P_0$) des Fahrzeugs (10) zentriert ist.

7. Verfahren zum Schätzen nach Anspruch 6, wobei der Radius der Scheibe in Abhängigkeit von dem horizontalen Schutzniveau (HPL) bestimmt wird, das der geolokalisierten Position ($P_0$) des Fahrzeugs (10) zugewiesen ist.

8. Verfahren zum Schätzen nach einem der vorhergehenden Ansprüche, wobei in dem Schritt des Auswählens die Partikel ($P_i$) in Abhängigkeit von dem Abstand ausgewählt werden, der sie von der geolokalisierten Position ($P_0$) des Fahrzeugs (10) trennt.

9. Verfahren zum Schätzen nach einem der vorhergehenden Ansprüche, wobei in dem Schritt des Aktualisierens die Partikel ($P_i$) auf der Karte nur in Abhängigkeit von Informationen bezüglich der Dynamik des Fahrzeugs bewegt werden.

10. Verfahren zum Schätzen nach einem der vorhergehenden Ansprüche, wobei in dem Schritt des Resamplings die Partikel ($P_i$) mithilfe einer Technik mit geringer Varianz resampelt werden.

11. Fahrzeug (10), umfassend:

- Mittel zum Speichern einer Karte;
- ein Geolokalisierungssystem, und
- einen Rechner, der geeignet ist, das Fahrzeug (10) auf der Karte vorzupositionieren,

**dadurch gekennzeichnet, dass** der Rechner geeignet ist, ein Verfahren zum Schätzen einer genauen Position ($P_p$) des Fahrzeugs (10) auf der Karte nach einem der vorhergehenden Ansprüche durchzuführen.

**Claims**

1. Method for estimating a precise position ($P_p$) of a vehicle (10) on a map storing data relating to road sections, comprising:

   - a step of acquiring at least one geolocated position ($P_0$) of the vehicle (10) by way of a geolocation system,
   - a step of pre-positioning the vehicle (10) on the map, at its geolocated position ($P_0$), and
   - a particle filtering step in which possible positions of the vehicle, called particles ($P_i$), are processed so as to determine the precise position ($P_p$) of the vehicle (10) on the map,

   **characterized in that** the particle filtering step comprises:

   - a preliminary step of distributing particles ($P_i$) on the map, as a function of the geolocated position ($P_0$) of the vehicle (10) on the map, the particles not being constrained on the map, and then a step of updating the particles ($P_i$) on the map as a function of information relating to the dynamics of the vehicle (10),
   - a step of calculating the likelihood ($w_i$) of each particle ($P_i$) based at least on data from the map,
   - a step of selecting a limited set of particles ($P_i$), and
   - on the sole condition that an indicator ($N_{eff}$) relating to the likelihood ($w_i$) of the selected particles ($P_i$) and to the number of selected particles ($P_i$) drops below a threshold, a step of resampling particles ($P_i$) on the map.

2. Estimation method according to Claim 1, wherein the likelihood ($w_i$) of each particle ($P_i$) is calculated as a function only of data from the map.

3. Estimation method according to Claim 1, wherein the likelihood ($w_i$) of each particle ($P_i$) is calculated as a function also of data from sensors allowing the vehicle (10) to perceive its surroundings, on the condition that these data are deemed to be reliable.

4. Estimation method according to one of the preceding claims, wherein, in the particle filtering step, the precise position ($P_p$) is chosen from among the limited set of selected particles ($P_i$) as a function of the likelihood ($w_i$) of each particle ($P_i$).

5. Estimation method according to one of the preceding claims, wherein the likelihood ($w_i$) of each particle ($P_i$) is calculated as a function of the position of the closest road section with respect to the particle ($P_i$).

6. Estimation method according to one of the preceding claims, wherein, in the preliminary step, the particles ($P_i$) are distributed in a disk centred on the geolocated position ($P_0$) of the vehicle (10).

7. Estimation method according to Claim 6, wherein the radius of the disk is determined as a function of the horizontal protection level (HPL) assigned to the geolocated position ($P_0$) of the vehicle (10).

8. Estimation method according to one of the preceding claims, wherein, in the selection step, the particles ($P_i$) are selected as a function of the distance between them and the geolocated position ($P_0$) of the vehicle (10).

9. Estimation method according to one of the preceding claims, wherein, in the update step, the particles ($P_i$) are moved on the map as a function only of information relating to the dynamics of the vehicle.

10. Estimation method according to one of the preceding claims, wherein, in the resampling step, the particles ($P_i$) are resampled using a low-variance technique.

11. Vehicle (10) comprising:

- means for storing a map,
- a geolocation system, and
- a computer designed to pre-position the vehicle (10) on the map,

**characterized in that** the computer is designed to implement a method for estimating a precise position ($P_p$) of the vehicle (10) on the map according to one of the preceding claims.

**Fig.1**

**Fig.2**

**Fig.3**

# Fig.4

# Fig.5

**EP 3 759 435 B1**

**RÉFÉRENCES CITÉES DANS LA DESCRIPTION**

**Documents brevets cités dans la description**

- DE 102013217060
- US 20130346423 A
- WO 0239063 A